# FASCICULE DE BREVET EUROPEEN

(11) **EP 3 582 467 B1**
(45) Date de publication et mention de la délivrance du brevet: **29.07.2026**
(21) Numéro de dépôt: 19179492.4
(22) Date de dépôt: 11.06.2019
(51) Int. Cl.: H04L 65/10

(54) **PASSERELLE ET PROCÉDÉ DE GESTION D'UN SERVICE TÉLÉPHONIQUE VOIP**
GATEWAY UND VERFAHREN ZUR VERWALTUNG EINES VOIP-TELEFONDIENSTES
GATEWAY AND METHOD FOR MANAGING A VOIP TELEPHONE SERVICE

(30) Priorité: 12.06.2018 FR 1855100
(43) Date de publication de la demande: 18.12.2019
(73) Titulaire: Orange, 92130 Issy-les-Moulineaux (FR)
(72) Inventeur: BOUVET, Bertrand, 22700 PERROS-GUIREC (FR)
(74) Mandataire: Cabinet Beau de Loménie

(56) Documents cités:
- US-A1- 2005 180 434
- US-A1- 2007 140 224
- US-A1- 2011 261 810

## Description

### Arrière-plan de l'invention

L'invention se rapporte au domaine général des télécommunications. Elle concerne plus particulièrement la fourniture d'un service de voix sur IP, VoIP (pour « Voice over IP » en anglais).

Le service téléphonique VoIP peut être offert par un fournisseur de services à ses clients dans un ensemble regroupant en outre plusieurs autres services tels que le service d'accès Internet, le service de télévision, le service de vidéo à la demande VoD (pour « Video on Demand» en anglais), le service VoWiFi (pour « Voice over Wi-Fi» en anglais) ou autres.

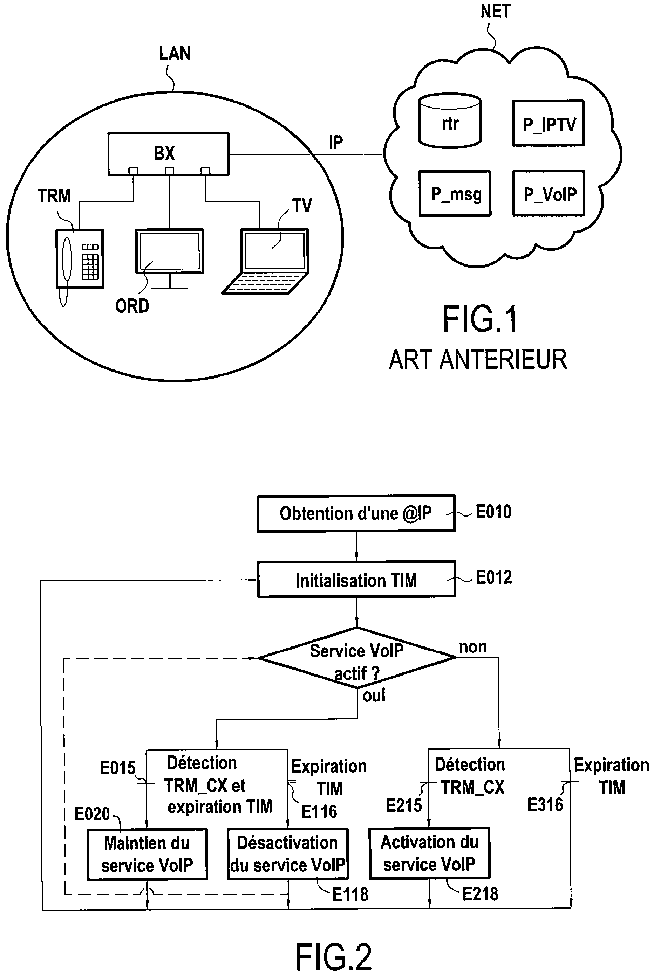

La figure 1 illustre un exemple d'architecture réseau, de l'état de la technique, permettant à un client de bénéficier de ces services, notamment du service téléphonique VoIP.

Une passerelle BX est placée au sein d'un réseau local LAN du client et peut se connecter à un réseau NET du fournisseur de service. La passerelle BX permet de connecter des terminaux du réseau LAN, tels qu'un téléphone TRM, une télévision TV ou un ordinateur ORD, à des serveurs de services, tels qu'une plateforme P_VoIP de service téléphonique VoIP, une plateforme P_msg de messagerie vocale, une plateforme P_IPTV de service télévision sur IP ou un routeur rtr permettant de connecter le réseau LAN au réseau Internet.

La passerelle BX dispose d'au moins une adresse IP et une configuration VoIP. Elle échange, avec la plateforme P_VoIP de service téléphonique VoIP, des messages de signalisation d'appel permettant d'émettre et de recevoir des appels téléphoniques. La signalisation est conforme à un protocole ou à une pile protocolaire de voix sur IP, par exemple, le protocole SIP (« Session Initiation Protocol », norme IETF 3261), IMS (« IP Multimedia Subsytem », norme 3GPP TS24.229), H323, MGCP (« Media Gateway Control Protocol »), ou WebRTC (« Web Real Time Communication »).

Cette méthode de gestion de service téléphonique VoIP par la passerelle BX présente certains inconvénients lorsque le client décide de ne pas utiliser le service téléphonique VoIP.

En premier lieu, en ce qui concerne le réseau NET du fournisseur du service, lorsque le service téléphonique VoIP n'est pas utilisé par le client :
- la plate-forme P_VoIP de service téléphonique VoIP,
- la plate-forme P_msg de messagerie vocale en cas de souscription du client à un service de messagerie vocale, et
- les serveurs d'attachement réseau DHCP (pour « Dynamic Host Configuration Protocol » en anglais) dans le cas où la passerelle BX a une architecture Multi-réseaux locaux virtuels Multi-VLAN (pour « Multiple Virtual LAN » en anglais) ou Multi-canaux virtuels Multi-VC (pour « Multiple Virtual Channel » en anglais),
sont surdimensionnés en termes de mémoire et de capacité de calcul CPU.

Dans le cas d'une passerelle BX avec une architecture Multi-VLAN ou Multi-VC, cette méthode de gestion du service téléphonique VoIP présente aussi un gaspillage d'adresse IP puisqu'une adresse IP est allouée à la passerelle BX spécifiquement pour le service téléphonique VoIP.

La signalisation entre la passerelle BX et la plateforme P_VoIP forme un trafic récurrent inutile. Ce trafic complexifie les opérations de configuration des équipements réseau lors de mise à jour logicielle et les opérations de redémarrage du service téléphonique VoIP, limite la prise en charge de nouveaux clients, la capacité de la plate-forme P_VoIP étant limitée, et entame une consommation énergétique supplémentaire pour l'alimentation et le refroidissement des serveurs.

En deuxième lieu, en ce qui concerne le réseau local LAN du client, la bande passante disponible pour les autres services n'est pas optimisée. En effet, le trafic de signalisation permettant le service téléphonique VoIP est plus prioritaire que les trafics correspondants aux autres services et peut engendrer des délais supplémentaires. De plus, la consommation électrique de la passerelle BX est accrue en raison du trafic de signalisation récurrent et inutile.

Les méthodes de gestion du service téléphonique VoIP décrites dans les documents US 2007/140224 A1, US 2011/261810 A1 et US 2005/180434 A1 présentent ces inconvénients.

Il existe donc un besoin pour la gestion d'un service téléphonique VoIP par une passerelle qui ne présente pas les inconvénients de l'état de la technique.

### Objet et résumé de l'invention

L'invention vise un procédé de gestion d'un service téléphonique VoIP mis en œuvre par une passerelle entre un réseau LAN et un réseau comportant une plateforme du service téléphonique VoIP selon la revendication 1. Ce procédé comporte une étape d'activation du service téléphonique VoIP sur détection d'un état connecté d'un terminal connecté à la passerelle.

Corrélativement, l'invention vise une passerelle entre un réseau LAN et un réseau comportant une plateforme d'un service téléphonique VOIP, selon la revendication 11, la passerelle comportant :
- au moins un module de détection pour détecter un état connecté d'un terminal connecté à la passerelle ; et
- un module de gestion du service téléphonique VoIP, ce module étant configuré pour activer le service téléphonique VoIP sur détection de l'état connecté.

La passerelle, conforme à l'invention, met en œuvre le procédé de gestion d'un service téléphonique VoIP, conforme à l'invention.

Le réseau comportant la plateforme du service téléphonique VoIP peut être un réseau métropolitain MAN ou un réseau étendu WAN.

Au sens de l'invention, le terminal peut être un téléphone, un ordinateur, une tablette, ou un autre dispositif communiquant apte à utiliser un service téléphonique VoIP.

Le terminal peut être un téléphone filaire, analogique ou numérique, ou un téléphone sans fil numérique, par exemple de technologie DECT (pour « Digital Enhanced Cordless nement dudit module (m_VoIP) de gestion.

Les caractéristiques et avantages du procédé de gestion d'un service téléphonique VoIP selon l'invention présentés ci-après s'appliquent de la même façon à une passerelle conforme à l'invention, et vice-versa.

L'invention permet d'optimiser les ressources en termes de capacité de calcul et de stockage au niveau de la plateforme du service téléphonique VoIP, en termes de bande passante au niveau de la passerelle, et en termes de consommation énergétique de la passerelle et de la plateforme du service téléphonique VoIP.

Dans un mode de réalisation, la passerelle est un équipement de terminaison de réseau, situé dans le réseau local LAN du terminal. Un tel équipement est commercialisé en France sous le nom de « box » offrant de multiples services, tel qu'un équipement LiveBox (produit commercialisé d'Orange France).

Dans un mode de réalisation, l'état connecté du terminal est détecté suite à un appairage du terminal sur la passerelle. Par exemple, lorsque le terminal est un téléphone de type DECT ou CAT-iq, son appairage sur une base de téléphone numérique sans fil intégrée à la passerelle permet de détecter son état connecté.

Dans un autre mode, l'état connecté du terminal est déduit de la détection d'un état décroché du terminal.

Ce mode de réalisation peut s'appliquer lorsque le terminal est un téléphone analogique pouvant se connecter à un port analogique de la passerelle, ou lorsque le terminal est un téléphone numérique sans-fil placé sur une base de téléphone numérique sans-fil connectée à un port analogique de la passerelle.

En effet, les terminaux téléphoniques analogiques et les bases de téléphone numérique sans fil sont en mode circuit ouvert quand les terminaux sont raccrochés. C'est seulement au décroché du terminal qu'un courant est détecté puisque le circuit électrique se ferme à une prise de ligne par l'utilisateur du terminal. La détection de ce courant permet de détecter un état connecté et décroché du terminal.

Le fait de déduire une connexion d'un terminal à la passerelle par la détection d'un décroché du terminal, est plus avantageux qu'une détection mécanique de connexion. En effet, un câble peut être connecté à la passerelle sans qu'un terminal y soit connecté.

De plus, la passerelle ne peut pas détecter une connexion sur son port analogique en envoyant des messages selon le protocole de signalisation V23 sur ce port analogique, car le protocole V.23 est prévu sans acquittement.

Dans un mode de réalisation, l'activation du service téléphonique VoIP est conditionnée par une détection des états connecté et décroché du terminal.

Ce mode présente l'avantage d'une meilleure optimisation dans le cas d'un terminal numérique sans fil, car le service téléphonique VoIP n'est activé que s'il est effectivement utilisé par le terminal. En effet, un état décroché du terminal est significatif de l'émission ou de la réception d'un appel.

Au sens de l'invention, le service téléphonique VoIP est dit effectivement utilisé s'il existe un terminal téléphonique connecté à la passerelle et si ce terminal a émis ou reçu au moins une communication téléphonique depuis une durée d'observation.

Dans un mode de réalisation, le procédé de gestion d'un service téléphonique VoIP selon l'invention comporte une étape de désactivation du service téléphonique VoIP suite à la détection de l'expiration d'un compte à rebours temporel réinitialisé à chaque activation du service.

Selon ce mode de réalisation, si à l'expiration d'une durée déterminée par le compte à rebours temporel, aucun état connecté ou connecté et décroché n'a été détecté, la passerelle désactive le service téléphonique VoIP.

Selon l'invention, le compte à rebours temporel constitue une fenêtre d'observation pour prendre la décision de désactiver ou non le service téléphonique VoIP au niveau de la passerelle.

La valeur du compte à rebours temporel peut être réglable.

Dans un mode de réalisation, le procédé de gestion d'un service téléphonique VoIP selon l'invention comporte une étape de réinitialisation du compte à rebours temporel sur détection d'un état raccroché succédant à une détection de décroché du terminal.

En effet, cet état raccroché marque la fin d'une communication. La fenêtre d'observation est alors mise à jour à la fin de cette communication.

Dans un mode de réalisation, le procédé de gestion d'un service téléphonique VoIP selon l'invention comporte une étape de réception, à partir d'une plateforme de messagerie vocale, d'une notification concernant un message vocal destiné au terminal, le message vocal ayant été redirigé vers la plateforme de messagerie vocale alors que le service téléphonique VoIP n'était pas activé.

Les messages vocaux peuvent ainsi être récupérés même si le service téléphonique VoIP n'est pas activé sur la passerelle. La plateforme de service téléphonique VoIP redirige des appels non répondus vers la plateforme de messagerie vocale. En cas de réactivation du service téléphonique VoIP au niveau de la passerelle, si la passerelle se souscrit à un service de messagerie vocale, elle est notifiée de l'existence de messages vocaux non écoutés. A son tour, la passerelle transmet la notification au terminal, charge à l'utilisateur de les consulter de manière classique à partir de son terminal.

Dans un mode de réalisation, lors de la redirection des appels non répondus vers la plateforme de messagerie vocale, la plateforme de service téléphonique VoIP notifie l'utilisateur du terminal de téléphonie VoIP, par exemple en lui envoyant un mail ou un message sur son téléphone mobile.

Dans un mode de réalisation, le module de détection est configuré pour détecter un état décroché du terminal connecté à ladite passerelle.

Dans un mode de réalisation, le module de détection est un composant électronique, par exemple un composant électronique compris dans un port de connexion du terminal.

Dans un mode de réalisation, le module de détection comporte un composant électronique et une application logicielle pilotant ce composant.

Dans un mode de réalisation, le module de gestion du service téléphonique VoIP de la passerelle selon l'invention est configuré pour activer le service téléphonique VoIP sur détection de l'état connecté et de l'état décroché du terminal.

Dans un mode de réalisation, la passerelle selon l'invention comporte une base de téléphone sans fil, cette base comporte un composant électronique configuré pour détecter au moins un état du terminal parmi l'état connecté et l'état décroché.

La configuration d'un terminal de type téléphone numérique sans fil sur la base de téléphone sans fil permet à la passerelle de détecter l'état connecté du terminal.

Dans un mode de réalisation, la passerelle selon l'invention comporte au moins un composant électronique de type FXS (pour «Foreign exchange Subscriber » en anglais) configuré pour détecter l'état décroché du terminal et déduire son état connecté.

L'invention peut ainsi être appliquée pour la gestion de service téléphonique VoIP dans le cas d'utilisation d'un téléphone analogique ou numérique connecté à un port FXS de la passerelle. L'invention s'applique aussi pour un téléphone numérique sans fil dont la base est connectée à un port FXS.

Dans un mode de réalisation, la passerelle selon l'invention comporte un compteur à rebours temporel, piloté par le module de gestion du service téléphonique VoIP, pour conditionner un fonctionnement du module de gestion.

L'invention vise également un programme d'ordinateur sur un support d'enregistrement, selon la revendication 9, ce programme étant susceptible d'être mis en oeuvre dans un ordinateur ou dans une passerelle selon l'invention, ce programme comportant des instructions adaptées à la mise en œuvre d'un procédé de de gestion d'un service téléphonique VoIP tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi des supports d'information ou d'enregistrement lisibles par un ordinateur, selon la revendication 10, et comportant des instructions du programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, chaque support d'informations ou d'enregistrement peut être un circuit intégré dans lequel le programme est incorporé, le circuit étant adapté pour exécuter ou pour être utilisé dans l'exécution du procédé selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- La figure 1, déjà décrite, illustre une architecture d'un réseau permettant la mise en œuvre d'un procédé de gestion de service de voix sur IP, conforme à l'art antérieur ;
- La figure 2 est un organigramme représentant les étapes d'un procédé de gestion de service de voix sur IP, conformément à un premier mode de réalisation de l'invention;
- La figure 3 illustre une architecture d'un réseau permettant la mise en œuvre d'un procédé de gestion de service de voix sur IP conformément au premier mode de réalisation de l'invention;
- La figure 4 est un organigramme représentant les étapes d'un procédé de gestion de service de voix sur IP conformément à un deuxième mode de réalisation de l'invention;
- La figure 5 illustre une architecture d'un réseau permettant la mise en œuvre d'un procédé de gestion de service de voix sur IP conformément au deuxième mode de réalisation de l'invention;
- La figure 6 est un organigramme présentant des étapes du procédé de gestion du service téléphonique VoIP conforme à un mode de réalisation de l'invention ;
- La figure 7 illustre l'architecture fonctionnelle d'une passerelle selon un mode de réalisation de l'invention ; et
- La figure 8 illustre l'architecture matérielle d'une passerelle selon un mode de réalisation de l'invention.

### Description détaillée d'un premier mode de réalisation

La **figure 2** est un organigramme représentant des étapes d'un procédé de gestion de service de voix sur IP, conforme à un premier mode de réalisation de l'invention.

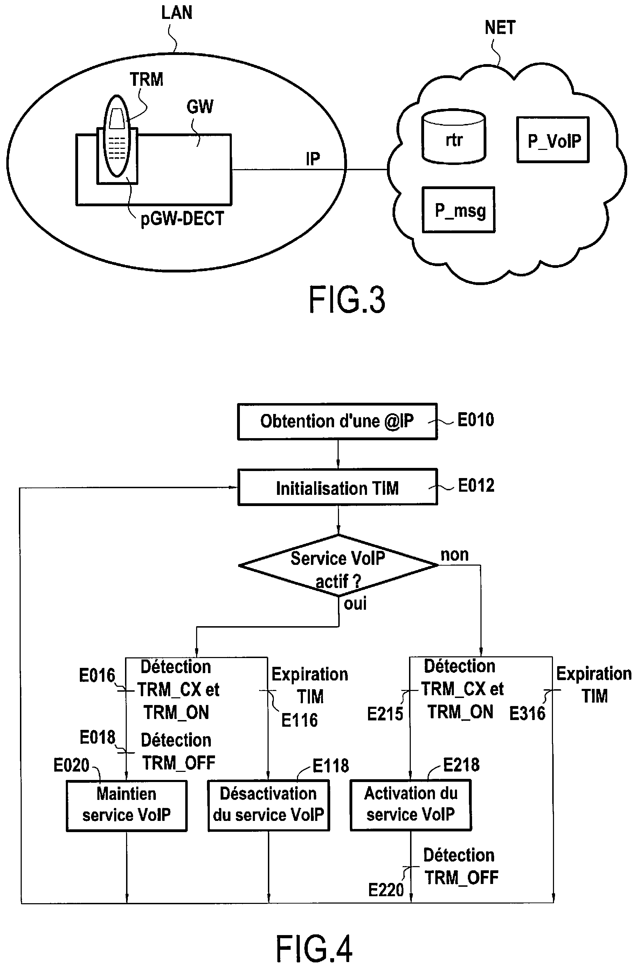

La **figure 3** présente une architecture d'un réseau permettant la mise en œuvre du procédé de gestion de service de voix sur IP, conformément à ce premier mode de réalisation.

Le procédé de l'invention est mis en œuvre par une passerelle GW entre un réseau local LAN et un réseau NET d'un fournisseur de service téléphonique VoIP, en référence aux étapes E215 et E218 décrites ultérieurement.

Dans ce mode de réalisation, la passerelle GW est un équipement de terminaison de réseau, comportant une base de téléphone sans fil de technologie DECT sur laquelle peut être connecté un terminal TRM de type DECT. Cette base intégrée à la passerelle comporte un composant électronique (chipset) pGW_DECT.

Dans ce mode de réalisation, le réseau NET du fournisseur de service comporte un serveur P_VoIP de plateforme de service téléphonique VoIP et un serveur P_msg de plateforme de messagerie vocale.

Dans ce mode de réalisation, la passerelle GW communique avec le serveur P_VoIP et le serveur P_msg conformément au protocole SIP.

Une application de communication VoIP est installée sur la passerelle GW.

Le service téléphonique VoIP est initialement inactivé sur la passerelle GW.

Au cours d'une étape E010 de démarrage de la passerelle GW, la passerelle GW applique une procédure d'attachement réseau qui consiste à se faire allouer au moins une adresse IP publique par un serveur d'allocation d'adresses IP (non présenté sur la figure 3), par exemple un serveur DHCP ou un serveur BAS (pour « Broadband Access Server » en anglais), de sorte à pouvoir bénéficier d'un service de connexion Internet.

Au cours de l'étape E010, la passerelle se fait allouer, auprès du serveur d'allocation d'adresses, une adresse IP publique pour le service Internet.

Au cours d'une étape E012, la passerelle GW initialise un compteur à rebours temporel TIM, par exemple à une durée de 2 mois. Cette durée conditionne, par la suite, la durée d'activation du service téléphonique VoIP.

Au cours d'une étape E215, la passerelle GW détecte la connexion du terminal TRM à la passerelle GW grâce au composant électronique pGW_DECT de la base DECT intégrée à cette passerelle.

Lorsque le terminal TRM de type DECT s'appaire sur la base DECT intégrée à la passerelle GW, des interfaces de programmation applicative API (pour « Application Programming Interface » en anglais) du composant pGW_DECT génèrent une notification reçue par l'application de communication VoIP.

Suite à cette détection de la connexion du terminal TRM (étape E215), la passerelle GW active le service téléphonique VoIP au cours d'une étape E218.

L'étape E218 d'activation du service téléphonique VoIP est identique à l'état de la technique. Une description générale de cette étape d'activation est fournie par la suite à titre d'exemple.

La passerelle GW envoie un paquet de demande de téléchargement d'une configuration VoIP via le service Internet à un serveur de configuration (non présenté sur la figure 3). Ce serveur s'appuie sur l'adresse IP source du paquet reçu pour identifier la passerelle GW et envoie les paramètres de configuration VoIP à la passerelle GW.

Dans ce mode, les paramètres de configuration VoIP comportent :
- un nom de domaine du service téléphonique VoIP à utiliser, par exemple de type FQDN (pour « Fully Qualified Domain Name » en anglais) ;
- une identité publique téléphonique, par exemple de type IMPU (pour « IP Multimedia Public User identity » en anglais) tel qu'un numéro de téléphone ;
- une identité privée allouée à la passerelle GW, par exemple de type IMPI (pour « IP Multimedia Private Identity » en anglais) ;
- une clé SIP pour authentifier la pile protocolaire SIP auprès de la plate-forme P_VoIP de service téléphonique VoIP ;
- une adresse d'un point d'entrée de la plate-forme P_VoIP à utiliser, par exemple de type FQDN ou de type « adresse IP : numéro de port » ;
- un identifiant d'une messagerie vocale réseau associée à la ligne VoIP, par exemple un identifiant URI (pour « Universal Resource Identifier» en anglais) d'un service MWI (pour « Message Waiting Indicator» en anglais) ; et
- un identifiant d'un pont de conférence associé à la ligne VoIP pour des communications à plus que 2 participants.

La passerelle GW reçoit ces paramètres de configuration et obtient l'adresse IP et le numéro de port du point d'entrée de la plate-forme P_VoIP.

Dans ce mode de réalisation, la passerelle GW a une architecture Multi-VLAN ou Multi-VC. La pile protocolaire SIP installée sur la passerelle GW déclenche la procédure d'obtention d'une adresse IP dédiée au service téléphonique VoIP puis envoie un message de demande d'enregistrement SIP au point d'entrée de la plate-forme P_VoIP. Dans ce mode, ce message de demande d'enregistrement est un message SIP REGISTER.

Dans un autre mode de réalisation correspondant à une architecture mono-VLAN ou mono-VC, la même adresse IP publique est allouée (E010) à la passerelle GW pour tous les services, y compris le service téléphonique VoIP.

L'enregistrement SIP vise à fournir à la plate-forme P_VoIP de service téléphonique VoIP un lien de correspondance entre l'identité publique téléphonique IMPU du terminal TRM et l'adresse de contact AoC (pour « Adress of Contact » en anglais) sur laquelle le terminal TRM peut être joignable.

L'adresse technique AoC correspond à :
- l'adresse IP de la passerelle GW dédiée au service téléphonique VoIP (ou l'adresse IP unique attribuée dans le cadre d'une architecture mono-VLAN ou mono-VC) ;
- un protocole de transport à utiliser pour transporter des paquets IP de signalisation d'appel SIP, par exemple le protocole UDP, TCP, SCTP ou TLS ; et
- un numéro de port à utiliser.

Puisque les paramètres de configuration VoIP fournissent un identifiant de messagerie vocale, après l'enregistrement SIP réussi, la passerelle GW envoie au point d'entrée de la plate-forme P_VoIP un message de demande de souscription au service de messagerie vocale. Dans ce mode de réalisation, ce message est un message SIP SUBSCRIBE. La plate-forme P_VoIP de service téléphonique VoIP relaie ce message vers la plate-forme de messagerie vocale P_msg.

A son tour, la plate-forme de messagerie vocale P_msg vérifie l'existence du client utilisateur du terminal TRM sur la base de l'identifiant publique IMPU et de son abonnement au service de messagerie vocale, puis envoie un message SIP NOTIFY à la passerelle GW pour lui notifier l'état de messages correspondants à ce client.

Le compteur à rebours TIM est initialisé (E012) à partir de l'activation (E218) du service téléphonique VoIP. Aussi, à partir de l'activation (E218) du service, la passerelle GW maintient le service téléphonique VoIP conformément à l'état de la technique. Ce maintien du service téléphonique VoIP comporte un renouvellement périodique d'un bail DHCP de l'adresse IP dédiée au service VoIP, un renouvellement périodique de l'enregistrement SIP, et un renouvellement périodique de la souscription du service de messagerie vocale MWI.

L'expiration du compteur à rebours TIM est détectée au cours d'une étape E015. En supposant que le terminal TRM est resté connecté à la passerelle GW jusqu'à l'expiration du compteur TIM, la passerelle GW poursuit le maintien du service téléphonique VoIP au cours d'une étape E020 conformément à l'état de la technique : renouvellement du bail DHCP, de l'enregistrement SIP et de la souscription au service de messagerie vocale MWI.

La passerelle GW initialise (E012) un nouveau cycle du compteur à rebours TIM.

L'expiration de ce nouveau cycle du compteur à rebours TIM est détectée au cours d'une étape E116. Nous supposons que le terminal TRM a été déconnecté de la passerelle GW avant l'expiration du compteur TIM et n'a pas été reconnecté. A l'expiration du compteur TIM (E116), le fait qu'aucune connexion d'un terminal TRM n'a été détectée illustre le fait que le service téléphonique VoIP n'a pas été utilisé pendant cette durée de 2 mois. De ce fait, au cours d'une étape E118, la passerelle GW désactive le service téléphonique VoIP.

La désactivation (étape E118) du service téléphonique VoIP est connue de l'état de la technique, elle est décrite d'une façon générale par la suite. Dans ce mode de réalisation, la désactivation comporte :
- un envoi par la pile SIP de la passerelle GW, à la plateforme P_VoIP, d'un message de dé-souscription du service de messagerie MWI et une réception par la passerelle GW de la plateforme de messagerie P_msg d'un message concernant l'état de messages vocaux du client ayant l'identité publique téléphonique IMPU correspondante. A l'acquittement de cette réception, les ressources (mémoire et capacité de calcul) sont libérées dans la plate-forme de messagerie vocale P_msg ;
- un envoi par la pile SIP de la passerelle GW, à la plateforme P_VoIP, d'un message de dé-souscription du service téléphonique VoIP. Les ressources de la plate-forme de service P_VoIP sont libérées ; et
- un envoi par la passerelle GW, au serveur DHCP, d'un message de libération de l'adresse IP qui était attribuée à la passerelle GW spécifiquement pour le service téléphonique VoIP dans ce cadre d'architecture Multi-VLAN ou Multi-VC.

Un nouveau cycle d'observation est lancé (E012) suite à la désactivation (E118) du service téléphonique VoIP.

Lorsque le service téléphonique VoIP est inactivé et que la passerelle GW détecte au cours d'une étape E316 l'expiration du compteur à rebours TIM sans détection d'un état connecté du terminal, la passerelle GW réinitialise le compteur au cours d'une étape E012 pour un nouveau cycle d'observation.

### Variante du premier mode de réalisation

Dans un mode de réalisation, la passerelle GW comporte une base intégrée de téléphone numérique de la technologie avancée sans fil - internet et qualité CAT-iq (pour « Cordless Advanced Technology-internet and quality » en anglais). Un terminal TRM de type DECT Cat-Iq peut s'appairer sur cette base DECT Cat-Iq intégrée à la passerelle GW. L'organigramme de la figure 2 peut être appliqué dans ce mode de réalisation.

### Description détaillée d'un second mode de réalisation

La **figure 4** est un organigramme représentant des étapes d'un procédé de gestion de service de voix sur IP conforme à un second mode de réalisation.

Ce second mode de réalisation présente une optimisation de ressources par rapport au premier mode décrit précédemment en référence aux figures 2 et 3. Dans ce second mode de réalisation, le service téléphonique VoIP n'est pas activé sur détection d'un état connecté du terminal TRM, mais sur détection d'un état connecté et décroché représentatif du fait que le service téléphonique VoIP est effectivement utilisé.

Dans ce mode, le terminal TRM est un téléphone numérique sans fil DECT ou DECT Cat-Iq, apte à se connecter à une base de téléphone sans fil intégrée à la passerelle GW, telle qu'illustrée à la figure 3.

Comme décrit précédemment, au démarrage de la passerelle GW, la passerelle obtient au cours de l'étape E010 au moins une adresse IP. La passerelle GW initialise le compteur à rebours TIM au cours de l'étape E012. Dans ce mode de réalisation, le service téléphonique VoIP est initialement non activé.

La passerelle détecte, à l'étape E216, un état connecté (TRM_CX) et décroché (TRM_ON) du terminal TRM grâce au composant électronique pGW_DECT de la base de téléphone sans fil intégrée à la passerelle GW.

Suite à cette détection, la passerelle GW active le service téléphonique VoIP au cours d'une étape E218.

La passerelle GW détecte (E220) grâce au composant pGW_DECT, un raccrochage du terminal TRM. La passerelle GW réinitialise alors, au cours d'une étape E012, le compteur à rebours TIM.

Si la passerelle GW détecte de nouveau un état connecté et décroché du terminal TRM (étape E016), la passerelle GW attend la détection d'un état raccroché (étape E018) pour continuer le maintien du service téléphonique VoIP au cours d'une étape E020.

Si l'expiration du compteur à rebours TIM est détectée (étape E116) alors que la passerelle GW n'a pas détecté un état connecté et décroché du terminal TRM, la passerelle GW désactive le service téléphonique VoIP au cours d'une étape E118.

Les étapes E218 d'activation de service, E118 de désactivation du service, et E020 de maintien du service sont identiques aux étapes E218, E118 et E020 décrites précédemment en référence à la figure 2.

### Variantes du second mode de réalisation

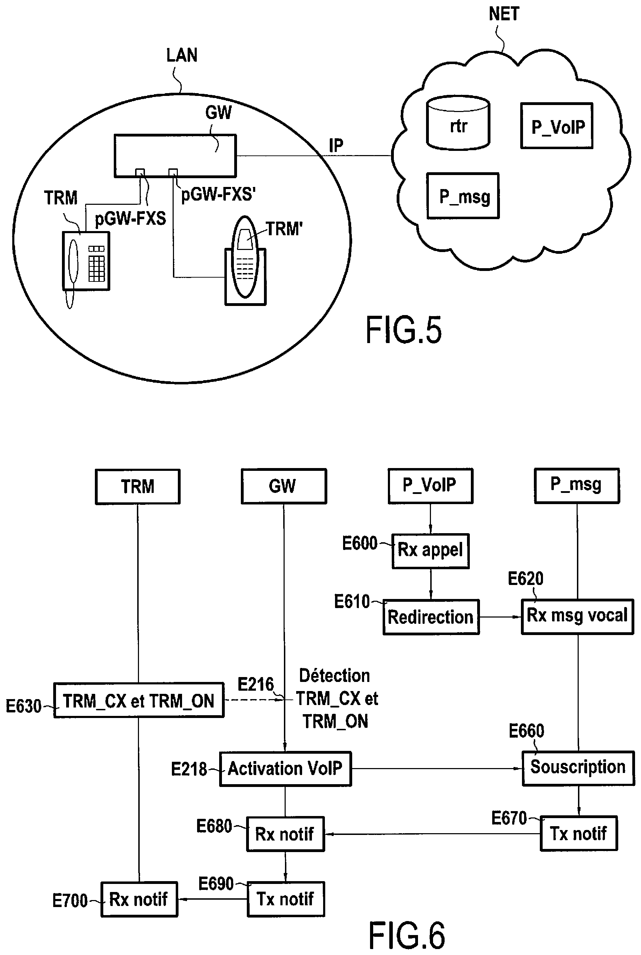

Dans un mode de réalisation, la passerelle GW comporte un port analogique pGW_FXS de type FXS auquel un téléphone analogique TRM peut se connecter. La **figure 5** présente une architecture d'un réseau permettant la mise en œuvre du procédé de gestion de service de voix sur IP, conformément à ce mode de réalisation. L'organigramme de la figure 4 peut aussi être appliqué dans ce mode de réalisation. En effet, la connexion d'un terminal analogique au port pGW_FXS de la passerelle GW est détectée par le décroché du terminal TRM.

L'organigramme de la figure 4 peut aussi être appliqué dans un mode de réalisation dans lequel le terminal TRM est un téléphone numérique apte à se connecter au port analogique pGW_FXS de la passerelle GW.

L'organigramme de la figure 4 peut aussi être appliqué dans un mode de réalisation dans lequel un téléphone numérique sans fil TRM', de type DECT par exemple, dont la base peut être connectée à un port analogique pGW_FXS' de la passerelle GW.

### Autres modes de réalisation

Dans un mode de réalisation, la passerelle GW ne réinitialise (E012) le compte à rebours temporel TIM que suite à une activation (E218) ou un maintien (E020) du service téléphonique VoIP sur la passerelle GW. Dans ce mode, le compte à rebours TIM n'est pas réinitialisé suite à une désactivation (E118) du service téléphonique VoIP. Si la passerelle GW détecte (E215) un nouvel état connecté du terminal après l'étape de désactivation (E118) du service téléphonique VoIP, la passerelle réactive le service (E218).

Dans un mode de réalisation, la passerelle GW communique avec la plateforme de service téléphonique VoIP, P_VoIP, selon un protocole IMS, H323, MGCP, ou WebRTC.

Dans un mode de réalisation, le service téléphonique VolP est initialement activé sur la passerelle GW pour sa première installation. En effet, il est fortement probable qu'un utilisateur connecte un terminal TRM à la passerelle GW lors de la première installation de la passerelle de sorte à tester l'ensemble des services. Ce mode de réalisation permet d'éviter la durée d'attente d'activation du service téléphonique VoIP, même si cette durée est de l'ordre de 1 à 2 secondes. Dans ce mode, la passerelle GW initialise (E012) le compteur à rebours TIM lors de sa première installation.

Dans un mode de réalisation, la passerelle GW diffuse une tonalité spécifique pendant l'étape d'activation (E218) du service téléphonique VoIP, par exemple une tonalité d'occupation ou une annonce vocale indiquant que le service téléphonique VoIP est en cours d'activation.

Dans un mode de réalisation, lorsque le service téléphonique VoIP n'est pas activé sur la passerelle GW, alors que la passerelle détecte (E216) un état connecté et décroché, la passerelle GW ne diffuse pas systématiquement une tonalité d'occupation ou une annonce vocale indiquant que le service téléphonique VoIP n'est pas activé pour éviter une expérience dégradée de l'utilisateur et pour éviter qu'il ne raccroche. En effet, l'activation est un processus qui dure de l'ordre de 1 à 2 secondes.

Dans un mode de réalisation, lorsqu'une activation du service téléphonique VoIP n'aboutit pas au bout d'une certaine durée, par exemple au bout de 2 secondes à cause d'une panne technique, la passerelle GW diffuse une tonalité d'occupation ou un message vocal indiquant que le service téléphonique VoIP est momentanément non disponible.

Dans un mode de réalisation, la passerelle GW dispose d'un moyen de mémorisation d'un numéro de téléphone composé. Supposons que le service téléphonique VoIP est désactivé sur la passerelle GW, alors qu'un utilisateur décroche un terminal TRM connecté à la passerelle pour émettre un appel, la passerelle GW détecte (E216) l'état connecté et décroché du terminal, mémorise le numéro composé pendant l'étape d'activation (E218) du service téléphonique VoIP pour que l'utilisateur n'ait pas besoin de recomposer le numéro appelé. Suite à l'activation du service téléphonique VoIP, la passerelle GW envoie un message de génération d'appel sortant, par exemple en envoyant un message SIP INVITE, contenant le numéro mémorisé.

Dans un mode de réalisation, la passerelle GW mémorise la dernière date/heure d'activation du service téléphonique VoIP. Si la passerelle GW est mise en arrêt puis remise en marche, la passerelle compare la date/heure du redémarrage avec la date/heure sauvegardée et réajuste la valeur du compteur à rebours TIM en fonction du résultat de cette comparaison.

Dans un mode de réalisation, un portail web ou un portail vocal interne à la passerelle GW restitue l'état du service téléphonique VoIP, activé ou désactivé, et/ou la valeur du compteur à rebours TIM.

Dans un mode de réalisation, la passerelle GW remonte l'état du service téléphonique VoIP (activé ou désactivé) au réseau NET du fournisseur de service, par exemple à une plateforme de service Internet ou à la plateforme en charge de la configuration VoIP.

La **figure 6** est un organigramme présentant des étapes du procédé de gestion du service téléphonique VoIP conforme à un mode de réalisation de l'invention.

Le procédé de l'invention est mis en œuvre par une passerelle GW entre un réseau local LAN et un réseau NET d'un fournisseur de service téléphonique VoIP en référence aux étapes E216, E218 et E680.

Le réseau NET comporte une plateforme P_VoIP de service téléphonique VoIP et une plateforme P_msg de service de messagerie vocale.

Nous supposons que le service téléphonique VoIP est initialement désactivé sur la passerelle GW.

Au cours d'une étape E600, la plate-forme P_VOIP de service téléphonique VoIP reçoit un appel destiné à un utilisateur d'un terminal TRM apte à se connecter à la passerelle GW. Comme le service VoIP est désactivé sur la passerelle GW, la plate-forme P_VOIP redirige l'appel, au cours d'une étape E610, vers la plateforme de messagerie P_msg.

Au cours d'une étape E620, la plateforme P_msg reçoit et mémorise un message vocal suite à l'appel manqué.

Au cours d'une étape E630, le terminal TRM se connecte à la passerelle GW et est décroché. La passerelle détecte l'état connecté et décroché du terminal TRM au cours d'une étape E216 et active alors le service téléphonique VoIP au cours d'une étape E218.

Comme décrit précédemment en référence aux figures 2 et 4, l'activation comporte une souscription à la plateforme P_msg.

La plateforme P_msg établit une souscription de la passerelle GW pour le compte de l'utilisateur du terminal TRM au cours d'une étape E660, notamment une souscription au service de notification MWI.

Au cours d'une étape E670, la plateforme P_msg envoie à la passerelle GW une notification de présence du message vocal mémorisé (E620).

La passerelle reçoit la notification au cours d'une étape E680 et la transmet au terminal TRM au cours d'une étape E690.

Les modes de réalisation décrits par la suite permettent de limiter l'impact des appels entrants ne pouvant être traités en temps réel.

Dans un mode de réalisation, lorsque le service téléphonique VoIP n'est pas activé sur la passerelle GW d'un utilisateur, le service de messagerie vocale est lié à un service de messagerie électronique afin de notifier l'utilisateur de la réception d'un message vocal. Pour cela, un mail généré à l'initiative de la plateforme de messagerie vocale P_msg, contenant par exemple le message vocal en pièce jointe, est envoyé à l'utilisateur.

Dans un mode de réalisation, lorsque le service téléphonique VoIP n'est pas activé sur la passerelle GW d'un utilisateur, la plateforme de messagerie vocale P_msg converge avec un service de téléphonie mobile. Lorsqu'un message vocal est reçu alors que le service téléphonique VoIP n'est pas activé sur la passerelle GW, la plateforme de messagerie vocale P_msg initialise la génération d'un message, par exemple un SMS, destiné à un terminal mobile de l'utilisateur.

Dans un autre mode, lorsque le service téléphonique VoIP n'est pas activé sur la passerelle GW d'un utilisateur, la plateforme de messagerie vocale P_msg initialise la génération d'une notification d'un service Visual Voice Mail, destiné à une application installée sur un terminal mobile de l'utilisateur. L'application permet de télécharger le message vocal.

### Description d'une passerelle conforme à l'invention

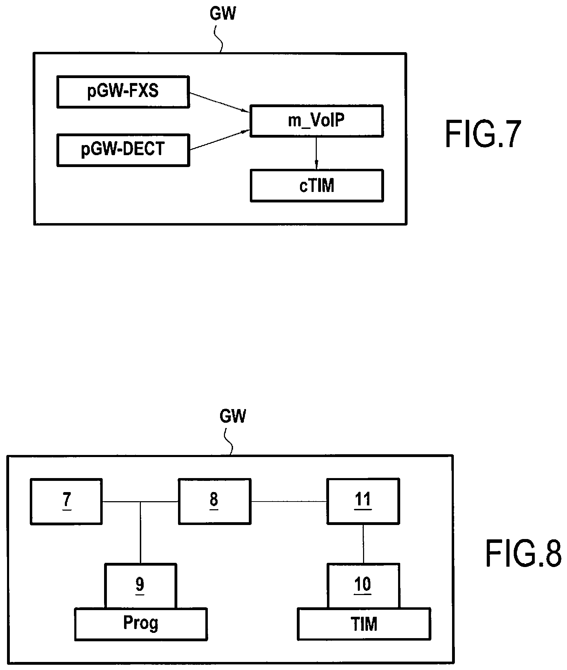

La **figure 7** représente une architecture fonctionnelle d'une passerelle GW conforme à un mode de réalisation de l'invention.

La passerelle GW, pouvant être mise en œuvre entre un réseau LAN et un réseau WAN comportant une plateforme P_VoIP d'un service téléphonique VoIP, comporte:
- un module de détection pGW-DECT configuré pour détecter un état connecté d'un terminal TRM connecté à cette passerelle GW ; et
- un module m_VoIP de gestion du service téléphonique VoIP, ce module m_VoIP étant configuré pour activer le service téléphonique VoIP sur détection de l'état connecté.

Dans un mode de réalisation, la passerelle GW comporte au moins un module de détection pGW-DECT ou pGW_FXS configuré pour détecter un état connecté et décroché d'un terminal TRM connecté à cette passerelle GW. Dans ce mode, le module m_VoIP de gestion du service téléphonique VoIP est configuré pour activer le service téléphonique VoIP sur détection de l'état connecté et décroché du terminal TRM.

Dans un mode de réalisation, la passerelle GW comporte un compteur à rebours temporel cTIM, piloté par le module m_VoIP de gestion du service téléphonique VoIP, pour conditionner un fonctionnement de ce module de gestion m_VoIP.

Dans un mode de réalisation, la passerelle GW comporte une base de téléphone sans fil telle que présentée par la figure 3. La base comporte un composant électronique pGW-DECT configuré pour détecter au moins un état du terminal TRM parmi l'état connecté et l'état décroché.

Dans un mode de réalisation, la passerelle GW comporte au moins un composant électronique pGW-FXS de type FXS, telle que présentée par la figure 5. Ce composant pGW-FXS est configuré pour détecter l'état connecté et décroché du terminal TRM.

Dans un mode de réalisation, la passerelle GW comporte en outre un afficheur pour indiquer l'état du service téléphonique VoIP, activé ou non.

Dans le mode de réalisation décrit ici, la passerelle GW conforme à l'invention a l'architecture d'un ordinateur, telle qu'illustrée à la **figure 8****.** Elle comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 de la passerelle GW selon l'invention constitue un support d'enregistrement conforme à l'invention, lisible par le processeur 7 et sur lequel est enregistré ici un programme d'ordinateur Prog conforme à l'invention.

La mémoire 10 de la passerelle GW permet d'enregistrer des variables utilisées pour l'exécution des étapes de l'invention, telles que la valeur du compteur à rebours TIM, la ou les adresses IP de la passerelle GW, l'adresse technique AoC de la passerelle GW, les paramètres de la configuration VoIP, etc.

Le programme d'ordinateur Prog définit des modules fonctionnels et logiciels ici, configurés pour gérer un service téléphonique VoIP. Ces modules fonctionnels s'appuient sur et/ou commandent les éléments matériels 7-11 de la passerelle GW cités précédemment.

## Revendications

1. Procédé de gestion d'un service téléphonique sur IP VoIP mis en œuvre par une passerelle (GW) entre un premier réseau local LAN et un second réseau (NET), ledit procédé étant **caractérisé en ce qu'**il comporte, quand ledit service téléphonique VoIP est inactivé sur ladite passerelle (GW),
- une étape (E215) de détection de la connexion d'un terminal (TRM) à ladite passerelle ;
- une étape d'activation (E218) dudit service téléphonique VoIP auprès d'une plateforme (P_VoIP) dudit service téléphonique VoIP, que comporte ledit second réseau, ladite plateforme étant identifiée par des paramètres de configuration reçus via internet d'un serveur de configuration, sur détection (E215, E216) d'un état connecté (TRM_CX) dudit terminal (TRM) connecté à ladite passerelle (GW).

2. Procédé selon la revendication 1 dans lequel le second réseau (NET) est un réseau métropolitain MAN ou un réseau étendu WAN, wide area network.

3. Procédé selon la revendication 1 ou 2 dans lequel l'état connecté (TRM_CX) dudit terminal (TRM) est détecté lorsqu'un état décroché (TRM_ON) dudit terminal est détecté (E216).

4. Procédé selon l'une des revendications 1 à 3 dans lequel ladite étape d'activation (E218) dudit service téléphonique VoIP est conditionnée par une détection (E216) de l'état connecté (TRM_CX) et de l'état décroché (TRM_ON) dudit terminal (TRM).

5. Procédé selon l'une des revendications 1 à 4 comportant une étape de désactivation (E118) dudit service téléphonique VoIP après une durée d'activation, la durée d'activation correspondant à l'expiration d'un compte à rebours temporel (TIM) initialisé (E012) à partir de ladite activation (E218).

6. Procédé selon la revendication 5 comportant une étape de réinitialisation (E012) dudit compte à rebours temporel (TIM) sur détection (E018, E220) d'un état raccroché (TRM_OFF) succédant à une détection (E016, E216) des états connecté et décroché dudit terminal (TRM).

7. Procédé selon l'une des revendications 4 à 6 dans lequel ledit service VoIP est maintenu (E020) pendant ladite durée d'activation.

8. Procédé selon l'une des revendications 1 à 7 dans lequel ladite activation (E218) dudit service téléphonique VoIP comporte :
- une réception d'au moins un paramètre de configuration VoIP en réponse à une demande envoyée par ladite passerelle ; et
- un enregistrement de ladite passerelle auprès de ladite plateforme sur la base dudit au moins un paramètre de configuration.

9. Programme d'ordinateur (Prog) comportant des instructions pour l'exécution du procédé de gestion d'un service téléphonique VoIP selon une des revendications 1 à 8, lorsque ledit programme est exécuté par un ordinateur.

10. Support d'enregistrement lisible par un ordinateur sur lequel est enregistré le programme d'ordinateur (Prog) selon la revendication 9.

11. Passerelle (GW) entre un premier réseau local LAN et un second réseau, ladite passerelle (GW) comportant :
- au moins un module de détection (pGW-DECT, pGW-FXS) configuré pour détecter un état connecté d'un terminal (TRM) connecté à ladite passerelle (GW),
ladite passerelle (GW) étant **caractérisée en ce qu'**elle comporte en outre :
- un module (m_VoIP) de gestion dudit service téléphonique VoIP, ce module (m_VoIP) étant configuré pour activer ledit service téléphonique VoIP auprès d'une plateforme (P_VoIP) dudit service téléphonique VoIP, que comporte ledit second réseau, ladite plateforme étant identifiée par des paramètres de configuration reçus via internet d'un serveur de configuration, sur détection dudit état connecté, quand ledit service téléphonique VoIP est inactivé sur ladite passerelle (GW).

12. Passerelle (GW) selon la revendication 11 dans laquelle ledit module de détection (pGW-DECT, pGW-FXS) est configuré pour détecter un état décroché dudit terminal (TRM) connecté à ladite passerelle (GW).

13. Passerelle (GW) selon l'une des revendications 11 ou 12 comportant une base de téléphone sans fil, ladite base comporte un composant électronique (pGW-DECT) configuré pour détecter au moins un état dudit terminal (TRM) parmi l'état connecté et l'état connecté et décroché.

14. Passerelle (GW) selon l'une des revendications 11 à 13 comportant au moins un composant électronique (pGW-FXS) de type FXS configuré pour détecter l'état connecté et décroché dudit terminal (TRM).

15. Passerelle (GW) selon l'une des revendications 11 à 14 comportant un compteur à rebours temporel (cTIM), piloté par ledit module (m_VoIP) de gestion du service téléphonique VoIP, pour conditionner un fonctionnement dudit module (m_VoIP) de gestion.

## Patentansprüche

1. Verfahren zum Verwalten eines VoIP-Telefondienstes, das von einem Gateway (GW) zwischen einem ersten lokalen Netzwerk LAN und einem zweiten Netzwerk (NET) implementiert wird, wobei das Verfahren **dadurch gekennzeichnet ist, dass** es umfasst, wenn der VoIP-Telefondienst an dem Gateway (GW) inaktiviert ist,
- einen Schritt (E215) des Detektierens der Verbindung eines Endgeräts (TRM) mit dem Gateway;
- einen Schritt des Aktivierens (E218) des VoIP-Telefondienstes bei einer Plattform (P_VoIP) des VoIP-Telefondienstes, die das zweite Netzwerk umfasst, wobei die Plattform durch Konfigurationsparameter identifiziert wird, die über das Internet von einem Konfigurationsserver beim Detektieren (E215, E216) eines verbundenen Zustands (TRM_CX) des mit dem Gateway (GW) verbundenen Endgeräts (TRM) empfangen werden.

2. Verfahren nach Anspruch 1, wobei das zweite Netzwerk (NET) ein Metropolitan Area Network MAN oder ein Wide Area Network WAN ist.

3. Verfahren nach Anspruch 1 oder 2, wobei der verbundene Zustand (TRM_CX) des Endgeräts (TRM) detektiert wird, wenn ein abgehobener Zustand (TRM_ON) des Endgeräts detektiert wird (E216).

4. Verfahren nach einem der Ansprüche 1 bis 3, wobei der Schritt des Aktivierens (E218) des VoIP-Telefondienstes durch ein Detektieren (E216) des verbundenen Zustands (TRM_CX) und des abgehobenen Zustands (TRM_ON) des Endgeräts (TRM) bedingt wird.

5. Verfahren nach einem der Ansprüche 1 bis 4, umfassend einen Schritt des Deaktivierens (E118) des VoIP-Telefondienstes nach einer Aktivierungsdauer, wobei die Aktivierungsdauer dem Ablauf eines Countdowns (TIM) entspricht, der ab der Aktivierung (E218) initialisiert wird (E012).

6. Verfahren nach Anspruch 5, umfassend einen Schritt des Reinitialisierens (E012) des Countdowns (TIM) beim Detektieren (E018, E220) eines aufgelegten Zustands (TRM_OFF), der auf ein Detektieren (E016, E216) des verbundenen und des abgehobenen Zustands des Endgeräts (TRM) folgt.

7. Verfahren nach einem der Ansprüche 4 bis 6, wobei der VoIP-Dienst während der Aktivierungsdauer aufrechterhalten wird (E020).

8. Verfahren nach einem der Ansprüche 1 bis 7, wobei das Aktivieren (E218) des VoIP-Telefondienstes umfasst:
- ein Empfangen mindestens eines VoIP-Konfigurationsparameters als Antwort auf eine von dem Gateway gesendete Anforderung; und
- ein Registrieren des Gateways bei der Plattform auf der Basis des mindestens einen Konfigurationsparameters.

9. Computerprogramm (Prog), das Anweisungen umfasst, die beim Ausführeg des Programms durch einen Computer das Verfahren zum Verwalten eines VoIP-Telefondienstes nach einem der Ansprüche 1 bis 8 ausführen.

10. Computerlesbares Speichermedium, auf dem das Computerprogramm (Prog) nach Anspruch 9 gespeichert ist.

11. Gateway (GW) zwischen einem ersten lokalen Netzwerk LAN und einem zweiten Netzwerk, das Gateway (GW) umfassend:
- mindestens ein Detektionsmodul (pGW-DECT, pGW-FXS), das dazu ausgelegt ist, einen verbundenen Zustand eines mit dem Gateway (GW) verbundenen Endgeräts (TRM) zu detektieren,
wobei das Gateway (GW) **dadurch gekennzeichnet ist, dass** es ferner umfasst:
- ein Modul (m_VoIP) zum Verwalten des VoIP-Telefondienstes, wobei dieses Modul (m_VoIP) dazu ausgelegt ist, den VoIP-Telefondienst bei einer Plattform (P_VoIP) des VoIP-Telefondienstes zu aktivieren, die das zweite Netzwerk umfasst, wobei die Plattform durch Konfigurationsparameter identifiziert wird, die über das Internet bei Detektion des verbundenen Zustands von einem Konfigurationsserver empfangen werden, wenn der VoIP-Telefondienst über das Gateway (GW) inaktiviert ist.

12. Gateway (GW) nach Anspruch 11, wobei das Detektionsmodul (pGW-DECT, pGW-FXS) dazu ausgelegt ist, einen abgehobenen Zustand des mit dem Gateway (GW) verbundenen Endgeräts (TRM)zu detektieren.

13. Gateway (GW) nach einem der Ansprüche 11 oder 12, das eine schnurlose Telefonbasis umfasst, wobei die Basis eine elektronische Komponente (pGW-DECT) umfasst, die dazu ausgelegt ist, mindestens einen Zustand des Endgeräts (TRM) unter dem verbundenen Zustand und dem verbundenen und abgehobenen Zustand zu detektieren.

14. Gateway (GW) nach einem der Ansprüche 11 bis 13, umfassend mindestens eine elektronische Komponente (pGW-FXS) vom Typ FXS, die dazu ausgelegt ist, den verbundenen und abgehobenen Zustand des Endgeräts (TRM) zu detektieren.

15. Gateway (GW) nach einem der Ansprüche 11 bis 14, umfassend einen Countdown-Zähler (cTIM), der durch das Modul (mVoIP) zum Verwalten des VoIP-Telefondienstes gesteuert wird, um einen Betrieb des Moduls (m_VoIP) zur Verwaltung zu bedingen.

## Claims

1. Method for managing a VoIP telephone service implemented by a gateway (GW) between a first local area network LAN and a second network (NET), said method being **characterized in that** it comprises, when said VoIP telephone service is inactivated on said gateway (GW),
- a step (E215) of detecting the connection of a terminal (TRM) to said gateway;
- a step (E218) of activating said VoIP telephone service with a platform (P_VoIP) of said VoIP telephone service, which said second network comprises, said platform being identified by configuration parameters received via the Internet from a configuration server, upon detection (E215, E216) of a connected state (TEM_CX) of said terminal (TRM) connected to said gateway (GW).

2. Method according to Claim 1, wherein the second network (NET) is a metropolitan area network, MAN, or a wide area network, WAN.

3. Method according to Claim 1 or 2, wherein the connected state (TRM_CX) of said terminal (TRM) is detected when an off-hook state (TRM_ON) of said terminal is detected (E216).

4. Method according to one of Claims 1 to 3, wherein said step (E218) of activating said VoIP telephone service is conditioned by a detection (E216) of the connected state (TRM_CX) and of the off-hook state (TRM_ON) of said terminal (TRM).

5. Method according to one of Claims 1 to 4, comprising a step (E118) of deactivating said VoIP telephone service after an activation period, the activation period corresponding to the expiry of a countdown (TIM) set (E012) from said activation (E218).

6. Method according to Claim 5, comprising a step (E012) of resetting said countdown (TIM) upon detection (E018, E220) of an on-hook state (TRM_OFF) following detection (E016, E216) of the connected state and off-hook state of said terminal (TRM).

7. Method according to one of Claims 4 to 6, wherein said VoIP service is maintained (E020) during said activation period.

8. Method according to one of Claims 1 to 7, wherein said activation (E218) of said VoIP telephone service comprises:
- receiving at least one VoIP configuration parameter in response to a request sent by said gateway; and
- registering said gateway with said platform on the basis of said at least one configuration parameter.

9. Computer program (Prog) comprising instructions for executing the method for managing a VoIP telephone service according to one of Claims 1 to 8 when said program is executed by a computer.

10. Computer-readable storage medium on which the computer program (Prog) according to Claim 9 is stored.

11. Gateway (GW) between a first local area network, LAN and a second network, said gateway (GW) comprising:
- at least one detection module (pGW-DECT, pGW-FXS) configured to detect a connected state of a terminal (TRM) connected to said gateway (GW),
said gateway (GW) being **characterized in that** it further comprises:
- a module (m_VoIP) for managing said VoIP telephone service, this module (m_VoIP) being configured to activate said VoIP telephone service with a platform (P_VoIP) of said VoIP telephone service, which said second network comprises, said platform being identified by configuration parameters received via the Internet from a configuration server, upon detection of said connected state, when said VoIP telephone service is inactivated on said gateway (GW).

12. Gateway (GW) according to Claim 11, wherein said detection module (pGW-DECT, pGW-FXS) is configured to detect an off-hook state of said terminal (TRM) connected to said gateway (GW).

13. Gateway (GW) according to one of Claims 11 and 12, comprising a cordless telephone base, said base comprising an electronic component (pGW-DECT) configured to detect at least one state of said terminal (TRM) out of the connected state and the connected and off-hook state.

14. Gateway (GW) according to one of Claims 11 to 13, comprising at least one FXS electronic component (pGW-FXS) configured to detect the connected and off-hook state of said terminal (TRM).

15. Gateway (GW) according to one of Claims 11 to 14, comprising a countdown counter (cTIM), controlled by said module (m_VoIP) for managing the VoIP telephone service, in order to condition operation of said management module (m_VoIP).
